# EUROPÄISCHE PATENTANMELDUNG

(11) **EP 1 734 273 A2**
(43) Veröffentlichungstag der Anmeldung: **20.12.2006**
(21) Anmeldenummer: 06009818.3
(22) Anmeldetag: 12.05.2006
(51) Int. Cl.: F16D 23/12, F16D 28/00

(54) **Vorrichtung zur Betätigung einer Kupplung**

(30) Priorität: 15.06.2005 DE 102005027611
(71) Anmelder: LuK Lamellen und Kupplungsbau Beteiligungs KG, 77815 Bühl (DE)
(72) Erfinder: Haas, Wolfgang, 77815 Bühl (DE); Friedmann, Oswald, 77839 Lichtenau (DE); Mán, Lászlo, Dr., 77833 Ottersweier-Unzhurst (DE)

(57) **Zusammenfassung**

Die Erfindung schafft eine Kupplungsbetätigungsvorrichtung, insbesondere zur Betätigung einer Kupplung oder einer Getriebe-Bremse eines Fahrzeuges, mit mindestens einer Feder, deren Federkraft zur Betätigung der Kupplung mittels einer zugeordneten mechanischen Kraftübertragungsstrecke auf die Kupplung übertragbar ist, wobei die Kraftübertragungsstrecke zumindest ein verlagerbares Kraftübertragungselement umfasst, welches als tangential zu einer Rotationsachse der Kupplung gelagerter Ausrückhebel 7 ausgebildet ist. Vorzugsweise sind mehrere Kraftübertragungselemente gleichmäßig über den Umfang verteilt und vierfach bis achtfach vorgesehen.

## Beschreibung

Die vorliegende Erfindung betrifft eine Kupplungsbetätigungsvorrichtung gemäß dem Oberbegriff des Patentanspruchs 1.

Bisher wurden Kupplungen beispielsweise mittels eines Hebels betätigt, der eine unveränderliche Hebellänge besitzt und beispielsweise mittels eines elektromotorischen Antriebs zum Öffnen und/oder Schließen der Kupplung angetrieben werden konnte. Wenn nun über den Verfahrweg der Kupplungsbetätigung eine veränderliche Betätigungskraft aufgebracht werden musste, so wurde zu diesem Zweck der Elektromotor, um ein entsprechend hohes Moment zur Verfügung zu stellen, mit entsprechenden Stromwerten beaufschlagt. Eine andere Möglichkeit der Kupplungsbetätigung besteht beispielsweise in der Form eines von einem Elektromotor angetriebenen Zentralausrückers, wobei auch hier der Elektromotor mit hohen Stromwerten bestromt werden muss, um entsprechend hohe Abtriebsmomente zur Verfügung zu stellen. Darüber hinaus ist es erforderlich, den Elektromotor - um eine Beschädigung der Kupplungsbetätigungsaktorik zu vermeiden - nach dem Schließen der Kupplung schnell abzubremsen.

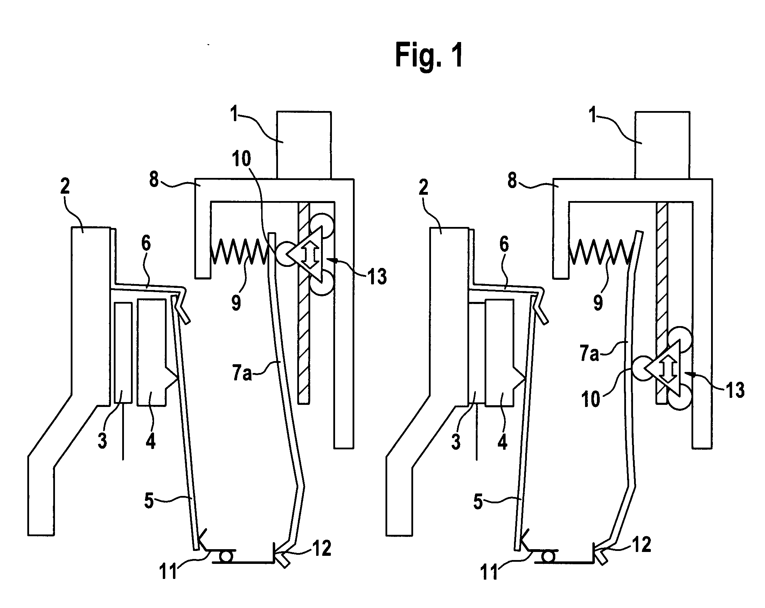

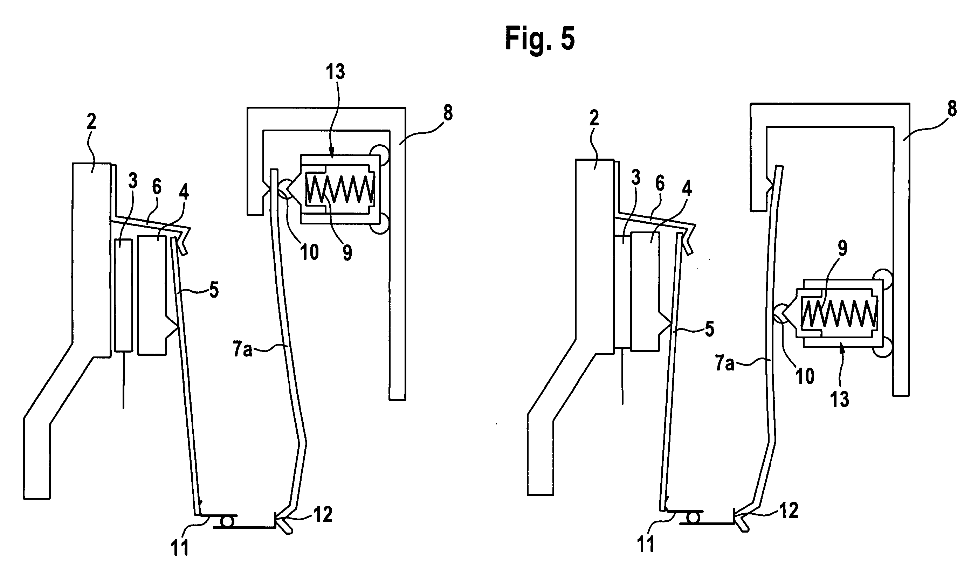

Um nun diese Problematik zu umgehen, wurde von der Anmelderin ein unter der DE 10 2004 009 832 A1 beschriebenes Hebelsystem zum Betätigen von Kupplungen geschaffen. Das dort beschriebene Hebelsystem - siehe Figur 1 bzw. 5 wegen des prinzipiellen Aufbaus eines solchen Hebelsystems - weist Hebelarme 7a mit veränderbaren Hebellängen auf, wobei zu diesem Zweck der den Hebel abstützende Hebel-Drehpunkt 10 entlang des Betätigungshebels verlagert werden kann und sich somit bei unveränderlichem Krafteinleitungspunkt in den Hebelarm 7a in Abhängigkeit von der Verlagerung des Hebel-Drehpunkts 10 verschiedene wirksame Hebellängen ergeben. Obwohl ein solches Hebelsystem bereits vielfache Vorteile gegenüber bekannten Kupplungsbetätigungsvorrichtungen aufweist, lässt es trotzdem Raum für deutliche Verbesserungen.

Das nach dieser Offenlegungsschrift bekannte Hebelsystem wird an dem Krafteinleitungspunkt der Betätigungskraft in den Hebelarm 7a mit einer vorbestimmbaren Kraft durch den Energiespeicher 9 (z.B. eine Feder) beaufschlagt. Ausgangsseitig, d. h. also beispielsweise auf der Seite eines Axiallagers 11 wirkt eine entsprechende, zur in den Betätigungshebel eingeleiteten Federkraft komplementäre Reaktionskraft. Da sich der Betätigungshebel an einem Hebel-Drehpunkt 10 abstützt, herrscht an diesem Abstützpunkt bei einem Hebellängenverhältnis von 1:1 zur Bildung eines Kräftegleichgewichts eine der doppelten Federkraft entsprechende Wiederlagerkraft.

Bei der Vermessung eines Versuchsaufbaus zu einem solchen Hebelsystem hat sich nun gezeigt, dass dieses System zu reibungsbehaftet ist und somit das Verhältnis von Betätigungsenergie zu Nutzenergie nicht zufriedenstellend ist.

Ausgehend von diesem Stand der Technik besteht daher die Aufgabe der vorliegenden Erfindung darin, ein Ausrücksystem in Form einer Kupplungsbetätigungsvorrichtung zu schaffen, welche unter beengten Bauraumverhältnissen eine nur geringe Betätigungskraft erfordert. Die vorliegende Erfindung kann dabei auch für eine Betätigung einer Getriebe-Bremse eingesetzt werden.

Diese Aufgabe wird gelöst durch eine Kupplungsbetätigungsvorrichtung mit den Merkmalen des Patentanspruchs 1.

Demnach weist die erfindungsgemäße Kupplungsbetätigungsvorrichtung, insbesondere zur Betätigung einer Kupplung bzw. einer Getriebe-Bremse eines Fahrzeuges, mindestens eine Feder auf, deren Federkraft zur Betätigung der Kupplung mittels einer zugeordneten mechanischen Kraftübertragungsstrecke auf die Kupplung übertragbar ist, wobei die Kraftübertragungsstrecke zumindest ein verlagerbares Kraftübertragungselement umfasst, welches als tangential zu einer Rotationsachse der Kupplung gelagerter Ausrückhebel ausgebildet ist.

Das Ausrücksystem ist rotatorisch um die Zentralachse angeordnet und kann auch rotatorisch betätigt werden. Der bzw. die Ausrückhebel sind tangential um die Rotationsachse der Kupplung angeordnet. Hierdurch wird einerseits der kompakte Aufbau der Kupplungsbetätigungsvorrichtung ermöglicht als auch andererseits eine nur geringe Betätigungskraft zum Verlagern der tangential angeordneten Ausrückhebel notwendig ist.

Vorzugsweise sind die mehreren Ausrückhebel vierfach bis achtfach am Umfang gleichmäßig verteilt vorgesehen, wobei die Ausrückhebel bevorzugt durch eine Laufeinheit betätigt werden, die einen punktförmigen Kontaktpunkt mit dem Ausrückhebel ausbildet. Die Laufeinheit wird vorzugsweise auf einer Kreisbahn bewegt und betätigt den Ausrückhebel, der an zwei weiteren Abstützpunkten linear gelagert ist.

Der Umfang einer Rolle der Laufeinheit, die den Kontaktpunkt zu dem Ausrückhebel ausbildet, ist vorzugsweise bogenförmig profiliert.

Besonders bevorzugt sind alle Laufeinheiten aller Ausrückhebel in einem gemeinsamen Lagerkäfig gelagert, der vorteilhafter Weise mittels eines Elektromotors betätigbar, d. h. verdrehbar ist.

Die vorstehende Aufgabe, die Merkmale und Vorteile nach der vorliegenden Erfindung können unter Berücksichtigung der folgenden, detaillierten Beschreibung der bevorzugten Ausführungsformen der vorliegenden Erfindung und unter Bezugnahme auf die zugehörigen Zeichnungen besser verstanden werden.

In den Zeichnungen ist in der
- Figur 1: der prinzipielle Aufbau eines Hebelsystems zur Betätigung einer Kupplung bzw. einer Getriebe-Bremse nach einer ersten Ausführungsform gezeigt;
- Figur 2: eine erfindungsgemäße Kupplungsbetätigungsvorrichtung in Übereinstimmung mit dem prinzipiellen Aufbau nach der Figur 1 in einer Teilquerschnittansicht gezeigt;
- Figur 3: diese Kupplungsbetätigungsvorrichtung in einer Draufsicht gezeigt, wobei die erfindungsgemäß tangential angeordneten Ausrückhebel und die Laufeinheiten dargestellt sind;
- Figur 4: eine zu der Figur 3 ähnliche Darstellung der erfindungsgemäßen Kupplungsbetätigungsvorrichtung gezeigt;
- Figur 5: der prinzipielle Aufbau eines Hebelsystems zur Betätigung einer Kupplung bzw. einer Getriebe-Bremse nach einer zweiten Ausführungsform gezeigt;
- Figur 6: eine erfindungsgemäße Kupplungsbetätigungsvorrichtung in Übereinstimmung mit dem prinzipiellen Aufbau nach der Figur 5 in einer Teilquerschnittansicht gezeigt;
- Figur 7: diese Kupplungsbetätigungsvorrichtung in einer Draufsicht gezeigt, wobei die erfindungsgemäß tangential angeordneten Ausrückhebel und die Laufrollen dargestellt sind;
- Figur 8: eine zu der Figur 7 ähnliche Darstellung der erfindungsgemäßen Kupplungsbetätigungsvorrichtung gezeigt;
- Figur 9: eine zu der Figur 7 ähnliche Darstellung der erfindungsgemäßen Kupplungsbetätigungsvorrichtung gezeigt; und
- Figur 10: eine Drehentkopplung mittels doppelten Planetenradsatz bei der erfindungsgemäßen Kupplungsbetätigungsvorrichtung dargestellt.

In der Figur 1 ist der prinzipielle Aufbau eines Hebelsystems zur Betätigung einer Kupplung in Form einer Nasskupplung mit einem Lamellenpaket 23 bzw. einer Getriebe-Bremse nach einer ersten Ausführungsform dargestellt, wobei die dort gezeigte Kupplungsbetätigungsvorrichtung innerhalb eines kurzen zylindrischen Bauraums unterbringbar ist. Dazu sind an einer Abstützung 8, zum Beispiel einem Gehäuse der Kupplung, ein Energiespeicher 9, vorzugsweise in Form einer Feder bzw. einer Tellerfeder vorgesehen, der an einem Ende eines Hebelarms 7a eines Ausrückhebels (in der Figur 1 oben) angreift und eine entsprechende Betätigungs- bzw. Federkraft einleitet. Ein Rollensystem 13 ist mittels eines Elektromotors 1 bewegbar derart, dass ein Drehpunkt 10 entlang des Hebelarms 7a verlagert werden kann, wie es in den beiden Darstellungen der Figur 1 gut zu erkennen ist. In der linken Darstellung der Figur 1 befindet sich das Rollensystem 13 am oberen Ende des Hebelarms 7a, während in der rechten Darstellung das Rollensystem 13 nach unten verfahren ist. In der rechten Darstellung ist die Kupplung betätigt, indem mittels des Energiespeichers 9 eine Kraft auf das obere Ende des Hebelarms 7a einwirkt, die am unteren Ende, an einem Auflagepunkt 12 in das Axiallager 11 der Ausrückfeder 5 eingeleitet wird. Die Ausrückfeder bzw. Tellerfeder 5 drückt dann auch axial auf die Druckplatte 4, so dass die Kupplungsscheibe 3 zwischen der Druckplatte 4 und der Gegendruckplatte 2 dementsprechend fest gehalten wird.

Die Ausrückfeder 5 ist an einem Kupplungsdeckel 6 gelagert. Das Rollensystem 13 läuft entlang der Abstützung 8. Durch Verlagerung des Drehpunktes 10, indem das Rollensystem 13 verfahren wird, werden die effektiven Hebelarmlängen zu beiden Seiten des Drehpunktes 10 am Hebelarm 7a verändert, so dass auf diese Art und Weise die Übersetzung der Federkraft, die über den Energiespeicher 9 eingeleitet wird, auf die Kupplungsbetätigungskraft, die über das Axiallager 11 wirkt, veränderbar ist.

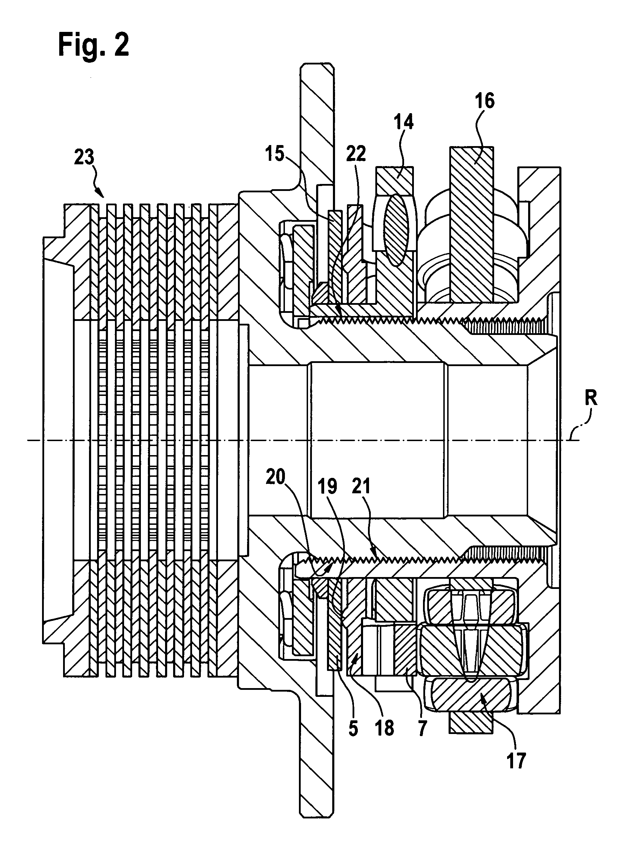

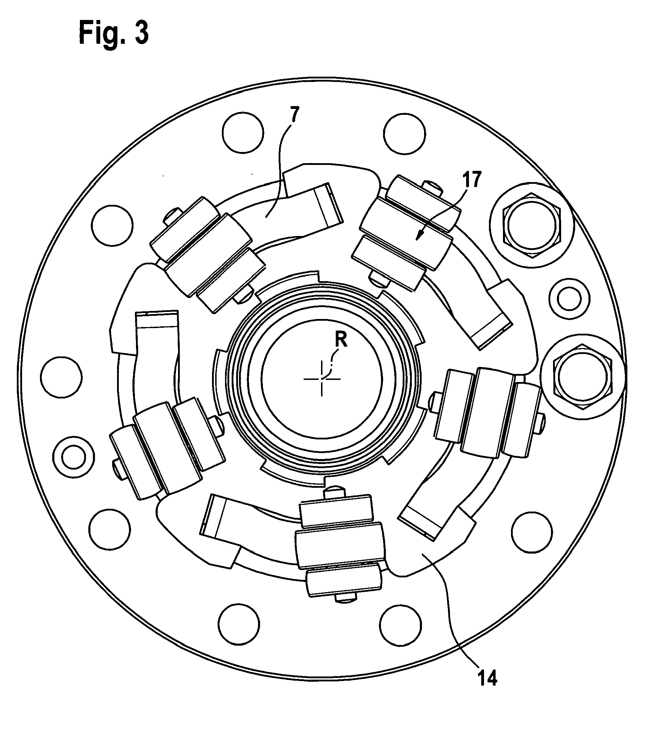

In den Figuren 2 bis 4 ist eine bevorzugte Ausführungsform der vorliegenden Erfindung dargestellt, wobei die Bezugszeichen, die in den Figuren Verwendung finden, überwiegend für funktionsgleiche Bauteile verwendet werden.

Gemäß der Erfindung sind die Ausrückhebel 7 tangential am Umfang und um die Rotationsachse R herum gleichmäßig beabstandet verteilt. Die gleichmäßige Verteilung ist vorzusehen, um eine gleichmäßige Kraftverteilung am Umfang zu erhalten.

In der gezeigten Ausführungsform sind fünf Ausrückhebel 7 angeordnet, wobei jeder Ausrückhebel 7 an zwei Abstützpunkten linear gelagert ist. Eine Laufeinheit 17, die in der gezeigten, bevorzugten Ausführungsform aus drei Rollen besteht, fährt vorteilhafter weise auf einer Kreisbahn über den Ausrückhebel 7. Besonders vorteilhaft ist es, wenn die Rolle, die den Kontakt zu dem Ausrückhebel 7 herstellt, am Umfang bogenförmig profiliert ist, wie dies in der Figur 2 gut zu erkennen ist. Damit ist ein punktförmiger Kontakt zum Ausrückhebel 7 hergestellt, der eine Hertz'sche Pressungsberührung schafft. Durch diese Punktberührung ist ein dritter, verlagerbarer Drehpunkt 10 am Ausrückhebel 7 geschaffen. Die Laufeinheit 17 kann einem bogenförmigen Verfahrweg der Rolle über dem Ausrückhebel 7 folgen, wobei ein geringer Anteil an Bohrreibung auftritt.

Die Laufeinheiten 17 sind vorzugsweise in einem gemeinsamen Lagerkäfig 16 gelagert, so dass durch Verdrehen des Lagerkäfigs 16 alle Laufeinheiten 17 gemeinsam bewegt werden können. Die Betätigung des Ausrückhebels 7 erfolgt durch Verdrehen des Lagerkäfigs 16, in dem die Laufeinheiten 17 aufgenommen sind.

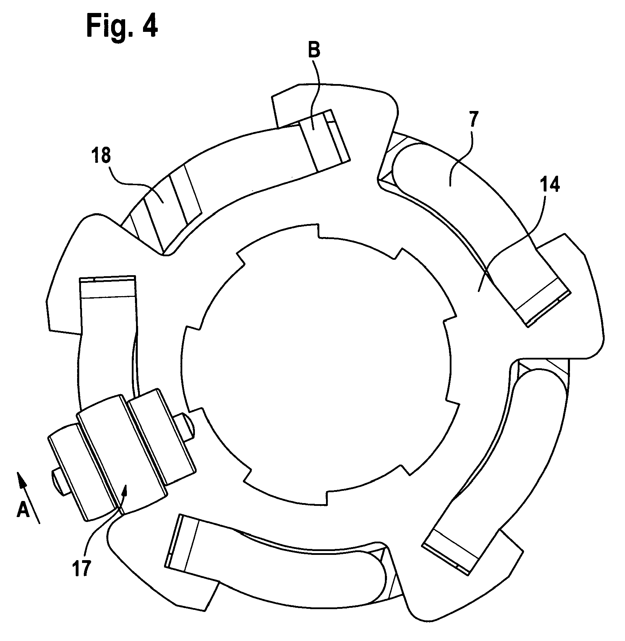

Eine Federkraft wird durch eine Tellerfeder 5 über eine Zwischenplatte 18 mit Nocken 19 auf eine Seite bzw. ein Ende des Ausrückhebels 7 aufgebracht, wie es in der Figur 2 gut zu erkennen ist. Das andere Ende des Ausrückhebels 7 ist über einen Stift drehbar an einem Hebelträger 14 gelagert. Dort ergibt sich dann die Hebeldrehachse B, wie sie in der Figur 4 dargestellt ist.

Der Hebelträger 14 stützt sich teilweise und abschnittsweise an einer Anpressplatte 15 über eine Abstützung 22 ab, so dass die Anpresskraft durch Verdrehen des Lagerkäfigs 16 und damit Verlagerung des Abstützpunktes bzw. Drehpunktes 10 der Rollen der Laufeinheit 17 am Hebel kontinuierlich verändert wird. Dabei wird die Energie aus der Tellerfeder 5 zum Betätigen der Kupplung benutzt.

Vorzugsweise werden zur Verlagerung des dritten Abstützpunktes fünf Laufeinheiten 17 eingesetzt, die jeweils aus drei Rollen bestehen, die in einem gemeinsamen Lagerkäfig 16 gelagert sind. Eine Rolle - in den Figuren 2 bis 4 die Rolle mit dem größten Durchmesser - läuft dabei auf dem Ausrückhebel 7, während die beiden anderen Rollen, die beidseits der größten Rolle angeordnet sind, sich an der Lagerhülse 20 abstützen.

Die Rollen übertragen dabei die gesamte Stützkraft über ihre Lagerungen, die in der Figur 2 in einer aufgebrochenen Teilschnittdarstellung zu sehen sind. Eine Verschleißnachstellung erfolgt in der gezeigten Ausführungsform durch Verdrehen der Lagerhülse 20, und zwar gegenüber einem Grundflansch und über ein Nachstellgewinde 21, welches vorzugsweise als Feingewinde ausgebildet ist. Die Bewegung wird dabei durch einen Anschlag zwischen Lagerkäfig 16 und Hebelträger 14 in der Nullposition übertragen.

In der Figur 4 ist in einer Draufsicht die Drehrichtung A für das Einrücken gezeigt; die Laufeinheit(en) 17 werden in Richtung des Pfeils A verlagert, so dass der Ausrückhebel 7 um die Hebeldrehachse B verschwenkt werden kann.

Die zweite bevorzugte Ausführungsform nach der vorliegenden Erfindung ist in den Figuren 5 bis 10 dargestellt. In der Figur 5 ist wiederum ein prinzipieller Aufbau eines Hebelsystems zur Betätigung einer Kupplung bzw. einer Getriebe-Bremse nach der zweiten Ausführungsform dargestellt, wobei die dort gezeigte Kupplungsbetätigungsvorrichtung innerhalb eines kurzen zylindrischen Bauraums eingebaut werden kann. Dazu stützt sich an einer Abstützung 8, zum Beispiel einem Gehäuse der Kupplung, ein Rollensystem 13 ab, welches vorzugsweise einen Energiespeicher 9 in Form einer Feder aufweist. Das eine Ende eines Hebelarms 7a eines Ausrückhebels (in der Figur 5 oben) stützt sich ebenfalls an der Abstützung 8 ab. Das Rollensystem 13 ist derart verlagerbar, dass ein Drehpunkt 10 entlang des Hebelarms 7a verfahren werden kann, wie es in den beiden Darstellungen der Figur 5 dargestellt ist. In der linken Darstellung der Figur 5 befindet sich das Rollensystem 13 am oberen Ende des Hebelarms 7a, so dass der Drehpunkt 10 mit dem Abstützpunkt an der Abstützung 8 zusammenfällt bzw. dazu ausgerichtet ist, während in der rechten Darstellung der Figur 5 das Rollensystem 13 nach unten verfahren ist. In der rechten Darstellung ist die Kupplung betätigt, indem mittels des Energiespeichers 9 eine Kraft auf den Hebelarm 7a einwirkt, die am unteren Ende, an einem Auflagepunkt 12 in das von der Lagerschale 26 aufgenommene Axiallager 11 der Ausrückfeder 5 eingeleitet wird. Die Ausrückfeder bzw. Tellerfeder 5 drückt dann auch axial auf die Druckplatte 4, so dass die Kupplungsscheibe 3 zwischen der Druckplatte 4 und der Gegendruckplatte 2 dementsprechend fest gehalten wird.

Die Ausrückfeder 5 ist an einem Kupplungsdeckel 6 gelagert. Das Rollensystem 13 läuft entlang der Abstützung 8. Durch Verlagerung des Drehpunktes 10, indem das Rollensystem 13 verfahren wird, werden die effektiven Hebelarmlängen zu beiden Seiten des Drehpunktes 10 am Hebelarm 7a verändert, so dass auf diese Art und Weise die Übersetzung der Federkraft, die über den Energiespeicher 9 eingeleitet wird, auf die Kupplungsbetätigungskraft, die über das Axiallager 11 wirkt, veränderbar ist.

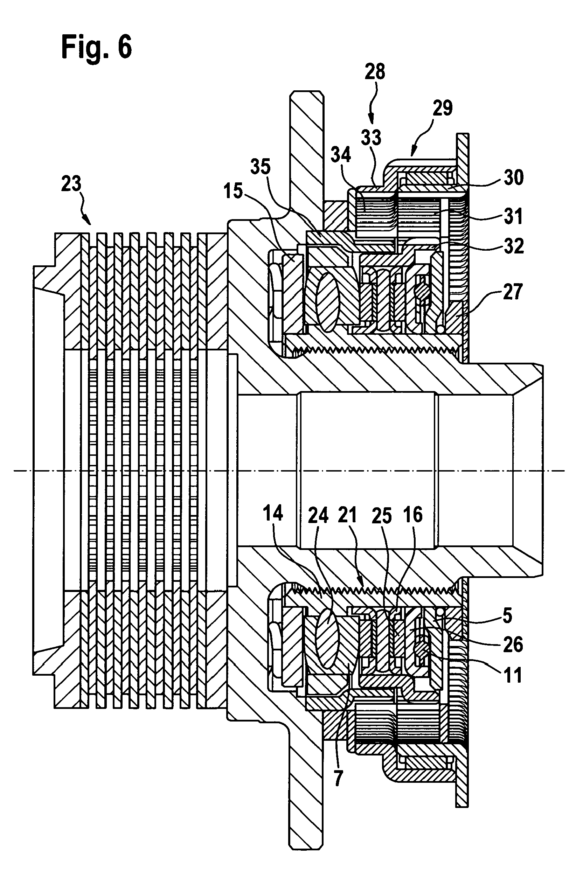

In den Figuren 6 bis 10 werden die, in den Figuren verwendeten Bezugszeichen wiederum im Wesentlichen für funktionsgleiche Bauteile verwendet.

Ein besonderer Vorteil der zweiten Ausführungsform liegt darin, dass alle zur Anpressung genutzten Bauteile axial hintereinander angeordnet sind. Dadurch wird der in radialer Richtung erforderliche Bauraum reduziert.

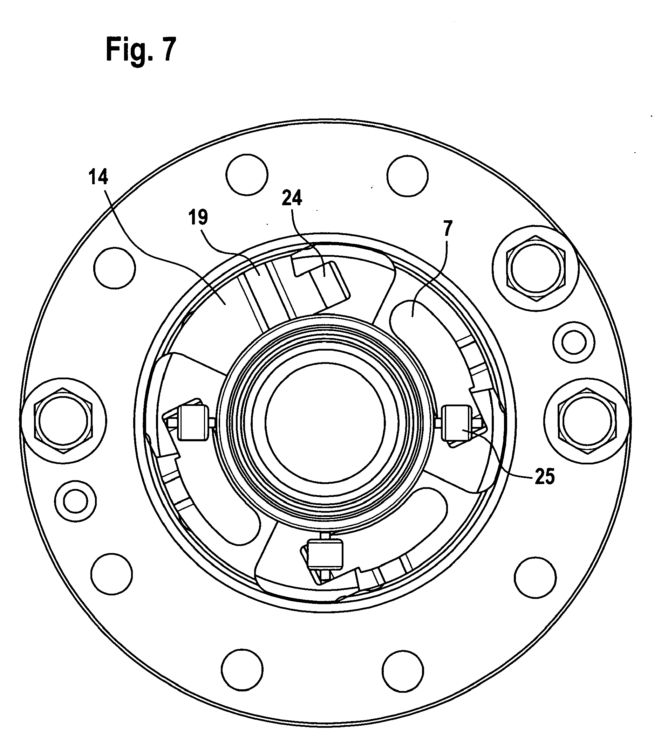

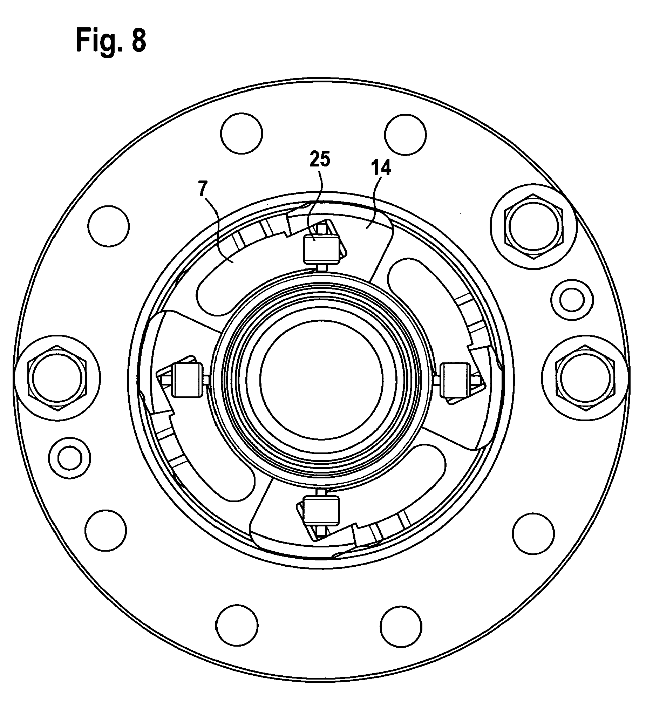

An jedem Ausrückhebel 7 wird lediglich eine Laufrolle 25 eingesetzt, welche in einem zweiteiligen Lagerkäfig 16 geführt ist. Vorzugsweise werden zwischen vier und acht Ausrückhebel 7 am Umfang gleichmäßig verteilt angeordnet. In den Figuren 7 und 8 ist zu erkennen, dass in der dargestellten Ausführungsform vier Laufrollen 25 verwendet werden.

Um das Abrollen der Laufrollen 25 zu ermöglichen, ist zusätzlich ein Axiallager 11 vorgesehen, welches als Axialkugellager ausgeführt ist. Eine platzsparende Anordnung kann gewählt werden, wenn ein Kugelkranz direkt zwischen einer Abstützplatte und der Tellerfeder 5 vorgesehen wird. Hierzu wird in die Tellerfeder eine entsprechende Laufbahn eingeprägt.

Sollen hohe Anpresskräfte bewirkt werden, kann anstatt einer Tellerfeder 5 auch ein Tellerfederpaket eingebaut werden.

Bei der gezeigten Ausführungsform ist der Ausrückhebel 7 mit seiner Drehachse 24 im Hebelträger 14 gelagert, welcher direkt mit dem Grundkörper über ein Nachstellgewinde 21 verbunden ist. Das Nachstellgewinde 21 dient zur Verschleißnachstellung, wie bei der ersten Ausführungsform.

Die zweite Auflageachse an dem Ausrückhebel 7 wird von einem Nocken 19 in der Anpressplatte 15 bestimmt. Der dritte, die (Kraft-) Übersetzung bestimmende Auflagepunkt wird von der Laufrolle 25 gebildet. Für den dritten Auflagepunkt ist eine punktförmige Berührung vorzusehen, da die Drehachsen des Ausrückhebels 7 und der Laufrolle 25 auseinander fallen und nur in einer Stellung parallel sind. Aus diesem Grund ist die Laufrolle 25 ebenfalls profiliert, wobei bezüglich der auftretenden Bohrreibung ein möglichst kleiner Profilierungsradius zu wählen ist.

Mit der dargestellten zweiten Ausführungsform nach der vorliegenden Erfindung ist es darstellbar, dass eine möglichst kleine Normalkraft auf die Laufrolle 25 einwirkt. Dazu wird der zweite Auflagepunkt, der Nocken 19 an der Anpressplatte 15 möglichst nah an den Drehpunkt des Ausrückhebels 7 gelegt. Im gezeigten Beispiel ist dieser Abstand 15 mm. Da die Ausrückhebellänge insgesamt 35 mm beträgt, kann mit der Laufrolle 25 über diesen zweiten Auflage- bzw. Abstützpunkt hinaus gefahren werden, so dass sich eine Kraftverstärkung um etwa den Faktor 2,5 ergibt. Damit kann die Tellerfederkraft und damit die Normalkraft auf die Laufrolle 25 klein gehalten werden.

Ein doppelter Planetenradsatz 28, bestehend aus einem ersten Hohlrad 33, einem ersten Sonnenrad 35 und einem ersten Planetenrad 34, sowie einem zweiten Hohlrad 30, einem zweiten Sonnenrad 32 und einem zweiten Planetenrad 31 ist vorgesehen, um eine Drehentkopplung auszubilden, um Reibungsverluste zu minimieren. Dabei stützt sich das eine Hohlrad 33 am Gehäuse ab, während das zweite Hohlrad 30 von einem Elektromotor bei 29 (Antrieb) verdreht wird, wodurch der Lagerkäfig 16 gegenüber den Aus rückhebeln 7 verdreht wird. Dadurch werden die Ausrückhebel 7 verschwenkt und betätigt, die wiederum die durch die Tellerfeder 5 eingeleitete Kraft an die Kupplung (nicht dargestellt) weitergeben. Ein Endring 27 ist fest verschweißt.

In der Figur 7 ist eine Draufsicht auf die erfindungsgemäße Kupplungsbetätigungsvorrichtung dargestellt, wobei ein Ausrückhebel 7 weggelassen worden ist, um die darunter liegende Struktur aus Hebelträger 14 und (Auflage-) Nocken 19 darstellen zu können. Der Ausrückhebel 7 dreht um die Drehachse 24 und die Laufrolle 25 läuft auf dem tangential angeordneten Ausrückhebel 7 vorzugsweise auf einer Kreisbahn.

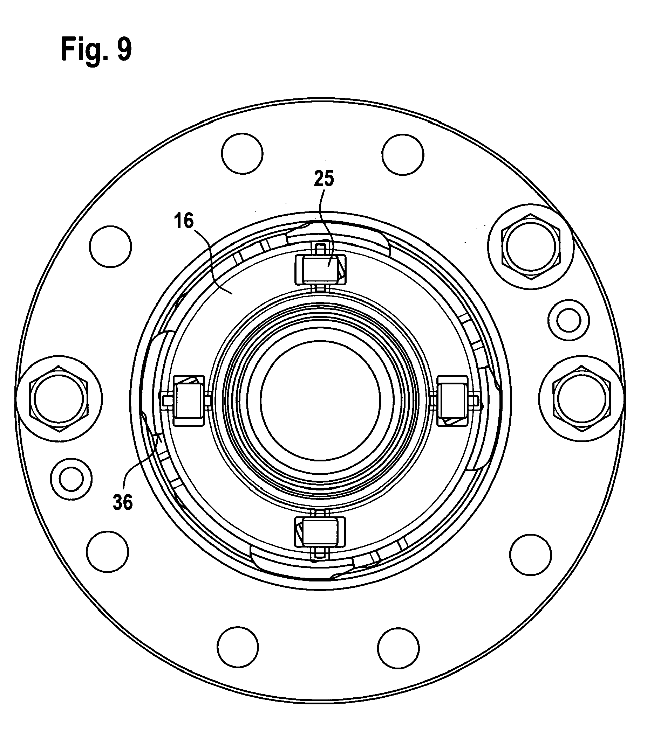

In der Figur 9 ist schließlich ein Anschlag 36 zu erkennen, der durch eine umgebogene Lasche im Lagerkäfig 16 für die Verschleißnachstellung vorgesehen ist.

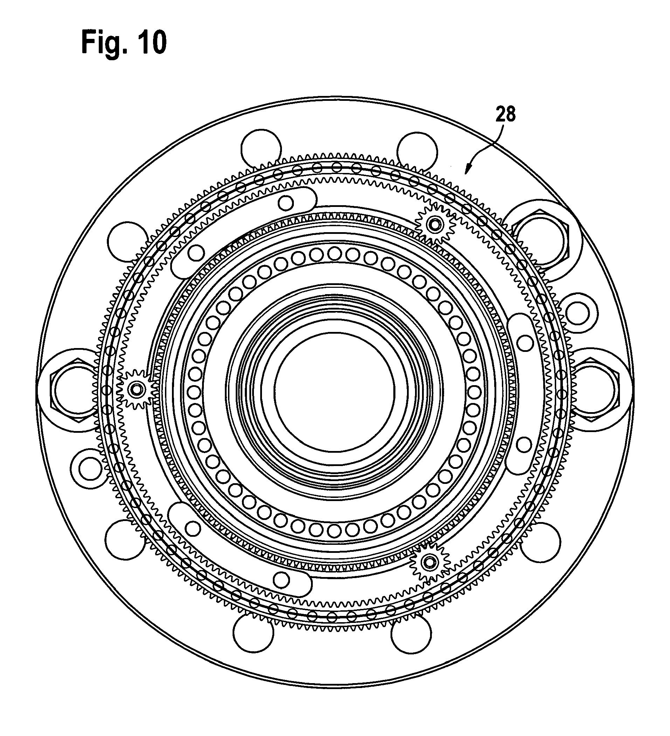

Die Draufsicht nach der Figur 10 zeigt abschließend den Planetenradsatz 28, wie er bereits in Zusammenhang mit der Figur 6 beschrieben ist. Die Drehentkopplung mittels eines doppelten Planetensatzes ist vorzugsweise vorgesehen, um Verluste an den sonst benötigten Axiallagern zu reduzieren. Dabei stützt sich das eine Hohlrad am Gehäuse ab, während das zweite Hohlrad von einem Elektromotor verdreht wird, wodurch der Lagerkäfig 16 gegenüber den Ausrückhebeln 7 verdreht wird. Dadurch werden die Ausrückhebel 7 betätigt, die wiederum die eingeleitete Kraft an die Kupplung weitergeben.

Die erfindungsgemäße Kupplungsbetätigungsvorrichtung kann Einsatz finden bei einer Allrad-Nasskupplung, vorzugsweise in einem Hinterachsdifferential zur Verteilung der Antriebskräfte zwischen den beiden Seiten eines Kraftfahrzeuges oder auch in einem Längsdifferential zur Verteilung der Antriebskräfte zwischen einer Hinterachse und einer Vorderachse.

Mit der vorliegenden Erfindung ist es möglich eine sehr kompakte Kupplungsbetätigungsvorrichtung zu schaffen, die einen nur geringen Energiebedarf aufweist,

Kurz zusammengefasst, schafft die vorliegende Erfindung eine Kupplungsbetätigungsvorrichtung, insbesondere zur Betätigung einer Kupplung oder einer Getriebe-Bremse eines Fahrzeuges, mit mindestens einer Feder, deren Federkraft zur Betätigung der Kupplung mittels einer zugeordneten mechanischen Kraftübertragungsstrecke auf die Kupplung übertragbar ist, wobei die Kraftübertragungsstrecke zumindest ein verlagerbares Kraftübertragungselement umfasst, welches als tangential zu einer Rotationsachse der Kupplung gelagerter Ausrückhebel ausgebildet ist. Vorzugsweise sind mehrere Kraftübertragungselemente gleichmäßig über den Umfang verteilt und vierfach bis achtfach vorgesehen.

Hinsichtlich vorstehend im Einzelnen nicht näher erläuterter Merkmale der Erfindung wird im Übrigen ausdrücklich auf die Ansprüche und die Zeichnungen verwiesen.

### Bezuaszeichenliste

- 1: Elektromotor
- 2: Gegendruckplatte
- 3: Kupplungsscheibe
- 4: Druckplatte
- 5: Tellerfeder (Ausrückfeder)
- 6: Kupplungsdeckel
- 7: Ausrückhebel
- 7a: Hebelarm
- 8: Abstützung
- 9: Energiespeicher (Feder)
- 10: Drehpunkt
- 11: Axiallager
- 12: Auflagepunkt
- 13: Rollensystem
- 14: Hebelträger
- 15: Anpressplatte
- 16: Lagerkäfig
- 17: Laufeinheit
- 18: Zwischenplatte
- 19: Nocken
- 20: Lagerhülse
- 21: Nachstellgewinde
- 22: Abstützung
- 23: Lamellenpaket
- 24: Drehachse
- 25: Laufrolle
- 26: Lagerschale
- 27: Endring
- 28: Planetenradsatz
- 29: Antrieb
- 30: 2. Hohlrad
- 31: 2. Planetenrad
- 32: 2. Sonnenrad
- 33: 1. Hohlrad
- 34: 1. Planetenrad
- 35: 1. Sonnenrad
- 36: Anschlag

- A: Drehrichtung f. Einrücken
- B: Hebeldrehachse
- R: Rotationsachse

## Patentansprüche

1. Kupplungsbetätigungsvorrichtung, insbesondere zur Betätigung einer Kupplung eines Fahrzeuges, mit mindestens einer Feder, deren Federkraft zur Betätigung der Kupplung mittels einer zugeordneten mechanischen Kraftübertragungsstrecke auf die Kupplung übertragbar ist, **dadurch gekennzeichnet, dass** die Kraftübertragungsstrecke zumindest ein verlagerbares Kraftübertragungselement umfasst, welches als tangential zu einer Rotationsachse der Kupplung gelagerter Ausrückhebel (7) ausgebildet ist.

2. Kupplungsbetätigungsvorrichtung nach Anspruch 1, **dadurch gekennzeichnet, dass** die Kraftübertragungselemente gleichmäßig über den Umfang verteilt und mehrfach, vorzugsweise vierfach bis achtfach, vorgesehen sind.

3. Kupplungsbetätigungsvorrichtung nach Anspruch 1, **dadurch gekennzeichnet, dass** der Ausrückhebel (7) an zwei Abstützpunkten linear gelagert ist.

4. Kupplungsbetätigungsvorrichtung nach Anspruch 1, **dadurch gekennzeichnet, dass** jedes Kraftübertragungselement mittels einer zugeordneten Laufeinheit (17) betätigbar ist, wobei die Laufeinheiten (17) in einem gemeinsamen, verdrehbaren Lagerkäfig (16) gelagert sind und der Lagerkäfig (16) von einem Elektromotor (1) angetrieben wird.

5. Kupplungsbetätigungsvorrichtung nach Anspruch 4, **dadurch gekennzeichnet, dass** die Laufeinheit (17) auf einer Kreisbahn bewegbar ist und mit dem Ausrückhebel (7) einen punktförmigen dritten Kontaktpunkt ausbildet.

6. Kupplungsbetätigungsvorrichtung nach Anspruch 4 oder 5, **dadurch gekennzeichnet, dass** die Laufeinheit (17) zumindest eine Rolle umfasst, deren Umfang bogenförmig profiliert ist.

7. Kupplungsbetätigungsvorrichtung nach Anspruch 4, **dadurch gekennzeichnet, dass** die Laufeinheit (17) mit dem Ausrückhebel (7) an einem verlagerbaren Drehpunkt (10) in Berührung steht und durch Verlagerung des dritten Kontaktpunktes oder durch Verschwenken des Ausrückhebels (7) die Betätigungskraft für die Kupplung veränderbar ist.

8. Kupplungsbetätigungsvorrichtung nach einem der Ansprüche 4 bis 7, **dadurch gekennzeichnet, dass** durch Verfahren der Laufeinheit (17) ein Verschwenken des Ausrückhebels (7) um eine Hebeldrehachse (B) bewirkt wird.

9. Kupplungsbetätigungsvorrichtung nach einem der Ansprüche 1 bis 9, **dadurch gekennzeichnet, dass** die Feder als Tellerfeder oder Tellerfederpaket vorgesehen ist.
